# EUROPEAN PATENT APPLICATION

(11) **EP 2 169 951 A1**
(43) Date of publication of application: **31.03.2010**
(21) Application number: 08783730.8
(22) Date of filing: 24.07.2008
(51) Int. Cl.: H04N 5/45

(54) **A CHANNEL SELECTION METHOD,A COMPOSITE ENCODING DEVICE AND A SET-TOP-BOX FOR IPTV**

(30) Priority: 26.07.2007 CN 200710128497
(71) Applicant: Huawei Technologies Co., Ltd., Longgang District, Shenzhen Guangdong 518129 (CN)
(72) Inventor: QIN, Xiaoqing, Shenzhen Guangdong 518129 (CN)
(74) Representative: Charles, Glyndwr
(86) International application number: PCT/CN2008/071737
(87) International publication number: WO 2009/012712

(57) **Abstract**

A channel selection method for an interactive network television is provided in the present invention. The method comprises: simultaneously displaying images of each channel in a channel set on a screen according to the received media stream; each channel is presented in different areas of the screen in thumbnails; receiving a signal from a controller; if the signal is used for switching between pages, switching the channel set; if the signal is used for selecting a particular image in this channel set, switching to the channel represented by the image. An encoding method, a composite encoding device and a set top box for the interactive network television are also provided in the present invention. The solution mentioned above helps accelerate switching in the prior art.

## Description

### FIELD OF THE INVENTION

This invention relates to the communications field, and in particular, to an IPTV channel selection method, a composite encoding device, and a set top box.

### BACKGROUND

The internet protocol television (IPTV), also known as interactive network television, describes IP network-based television. Based on the broadband network infrastructure, IPTV relies mostly on Personal Computer (PC), or Television and IPTV Set Top Box (IPTV STB), or other terminals to deliver videos on demand (VOD) and live video services.

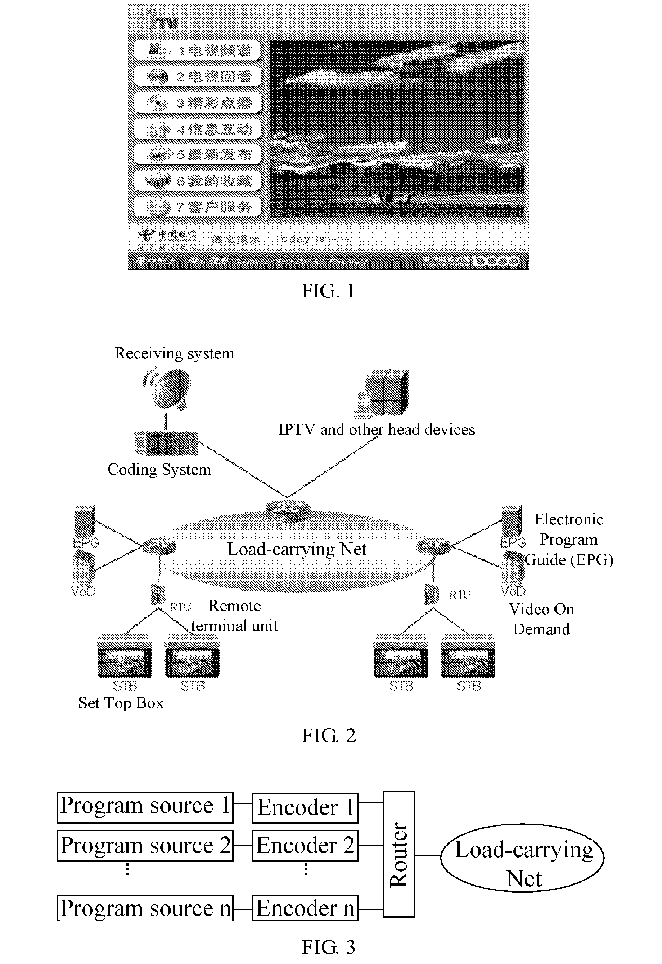

Two methods are employed to search live programs in prior IPTV systems. The first method is to switch live between channels through the "+/-" key or a numeric key, thus creating an experience comparable to analog or digital televisions. This method is simple, and people are quite used to it. The second method is to use an electronic program guide (EPG) to choose a desired channel, thus bringing a user experience similar to the VOD. FIG. 1 shows a typical screenshot of the EPG on an IPTV.

While implementing the present invention, the inventor has found notable disadvantages of these two methods. A large number of channels and slow switching speed between digital video broadcasting (DVB) and IPSTB will decelerate the searching speed and degrade the user experience.

### SUMMARY

An IPTV channel selection method is provided in an embodiment of the present invention to accelerate switching speed in the prior art.

An IPTV channel selection method is provided in an embodiment of the present invention. The method comprises:
simultaneously displaying images of each channel obtained from a channel set on a screen according to the received media stream, where these channel images obtained from a channel set are respectively presented in different areas of the screen in thumbnails; and
receiving a signal from a controller: if the signal is used for switching between pages, switching the channel set; if the signal is used for selecting a particular image from this channel set, switching the channel represented by this image.

An IPTV encoding method is provided in an embodiment of the present invention. The method comprises:
combining program sources of the channel set selected by the user into a media stream, and delivering the media stream, where the delivered media stream enables the program sources of multiple channels in the channel set to be displayed on the screen in thumbnails and each channel is displayed in different areas of the screen.

An IPTV-based composite encoding device is provided in an embodiment of the present invention. The device comprises:
multiple composite encoders, adapted to collect program sources of a given number of channels, combine the program sources of the given number of channels into a media stream, and deliver the media stream.

An IPTV STB is provided in an embodiment of the present invention. The device comprises:
a decoder, adapted to: decode the media stream of a channel set received by the STB to generate program sources of multiple channels, and display images of each channel in a channel set in different areas of the screen in thumbnails; and
a controller signal receiving and processing module, adapted to receive a signal from a controller: if the signal is used for switching between pages, switching the channel set; if the signal is used for selecting a particular image from this channel set, switching to the channel represented by the image.

An IPTV STB is provided in an embodiment of the present invention. The STB comprises:
a receiver, adapted to receive an IPTV media stream, where the media stream is combined from the program sources of multiple channels in a channel set;
a decoder, adapted to decode the media stream received by the receiver to generate the program sources of multiple channels, and display images of each channel in a channel set on a screen, where images of each channel obtained from the channel set is presented in different areas of the screen in thumbnails; and
a controller signal receiving and processing module, adapted to receive a signal from a controller: if the signal is used for switching between pages, switching the channel set; if the signal is used for selecting a particular image in this channel set, switching to the channel represented by the image.

By displaying program sources on the same screen, this solution can assist a user in choosing a desired channel, thus accelerating switching in the prior art and enhancing user experience.

### BRIEF DESCRIPTION OF THE DRAWINGS

The figures mentioned herein form part of the application to further illustrate the present invention. All the embodiments and descriptions are intended to explain rather than confine the scope of the present invention. Among the figures:
FIG. 1 shows a screenshot of typical IPTV EPG;
FIG. 2 shows an IPTV network;
FIG. 3 shows a block diagram of the encoder system in FIG. 2;
FIG. 4 shows a flowchart of IPTV channel selection method in an embodiment of the present invention;
FIG. 5 shows a screenshot of a set of channels on the same screen in an embodiment of the present invention;
FIG. 6 shows a block diagram of the composite encoder in an embodiment of the present invention; and
FIG. 7 shows a screenshot of channel selection in an embodiment of the present invention.

### DETAILED DESCRIPTION

FIG. 2 shows an IPTV network. Some related components that are used for broadcasting a live program, such as STB, remote terminal unit (RTU), EPG, and encoder system, are mentioned in an embodiment of the present invention. Other components, however, are not specified in the present invention. After a user has selected channels by using numeric keys, "+/-" keys or EPG, an STB can obtain a channel's address information (for example, multicast address and multicast port number) from a local destination or EPG, and start to play a program according to the information.

The IPTV system usually comprises multiple live channels, each of which has its own address information. FIG. 3 shows a block diagram of an encoder system in FIG. 2. The encoder can encode the program source to generate media streams, which can be transferred through an IP network and contain a channel's address information.

The present invention is illustrated in the following figures and embodiments.

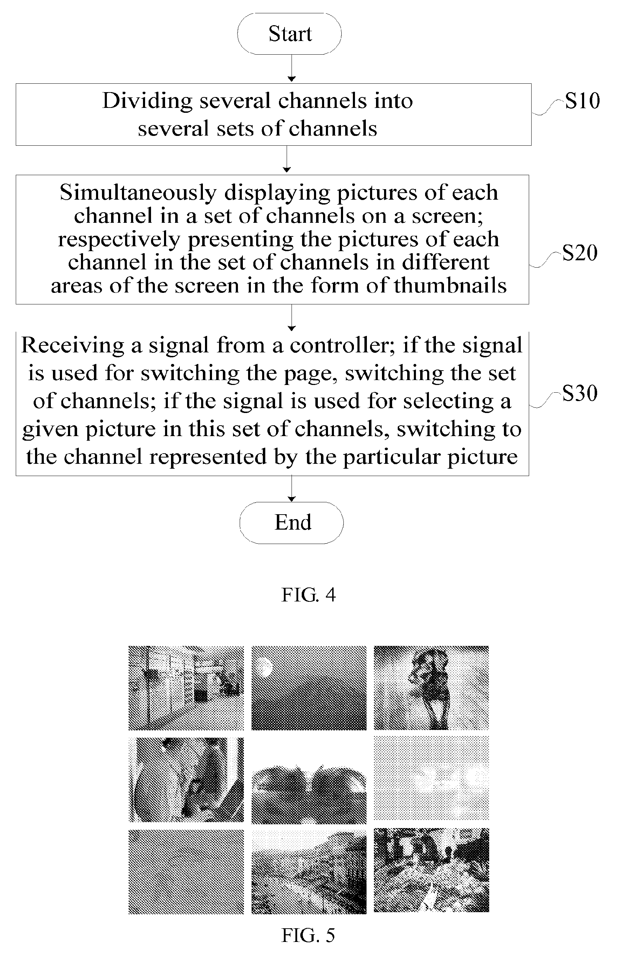

FIG. 4 shows a flowchart of the IPTV channel selection method in an embodiment of the present invention. This method comprises the following steps.

Step S10: Dividing multiple channels into multiple channel sets. A channel set comprises at least one channel, normally multiple channels.

Step S20: Simultaneously displaying images of each channel in a channel set on a screen according to the received media stream. Images of each channel are respectively presented in different areas of the screen in thumbnails. FIG. 5 shows a screenshot of embodiment with a channel set on the same screen, while each channel plays programs continuously. In this way, an extra channel, which carries its own address information, is added.

Step S30: Receiving a signal from a controller. If the signal is used for switching between pages, switching the channel set; if the signal is used for selecting a particular image in this channel set, switching to the channel represented by the image. Optionally, the process of dividing channels into multiple sets of channels comprises:
combining a given number of channels from multiple channels into a channel set;
combining the remaining channels, of which the number is less than the given number, into a channel set; and
combining the program sources of each channel set into a media stream.

Optionally, the process of combining the program sources of each channel set into a media stream comprises:
collecting, by the composite encoder the program sources of each channel in the channel sets, and combining the program sources into a new media stream.

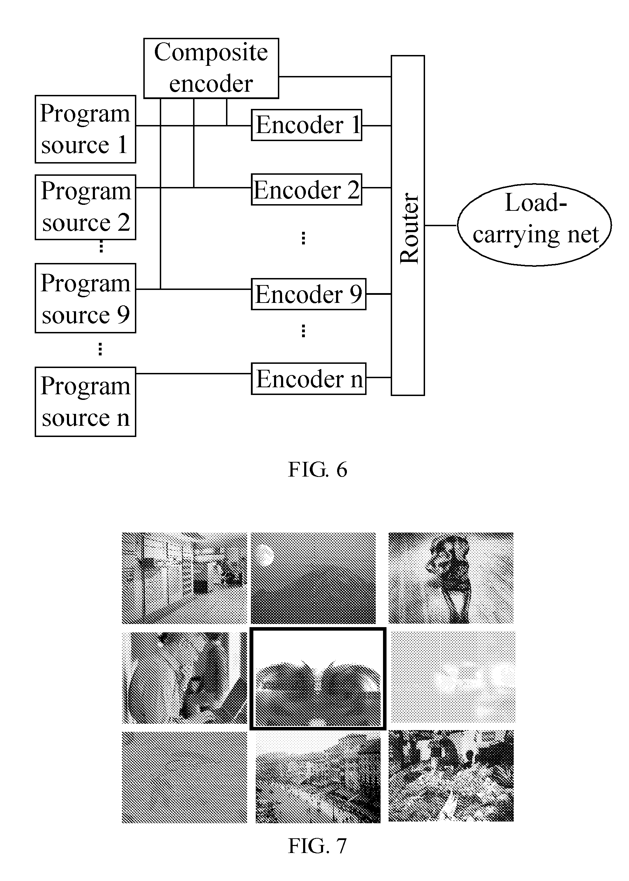

FIG. 6 shows a block diagram of a composite encoder in an embodiment of the present invention. An IPTV-based composite encoding device is provided in an embodiment of the present invention. The composite encoding device comprises multiple composite encoders, which are adapted to collect program sources of a given number of channels and combine the program sources into a new media stream.

Optionally, the process of simultaneously displaying images of each channel in a set of channels on a screen comprises: decoding the media stream. The decoded program sources with multiple channels are respectively presented in different areas of a screen in thumbnails; and each channel is displayed in different locations of the screen.

Optionally, the page switching signal is sent from the page turning key of the controller.

Optionally, a particular image of a channel set can be selected through an interface connected to EPG. The interface is represented by a channel selection diagram. FIG. 7 shows a screenshot of channel selection in an embodiment of the present invention. After a user has switched channels through the shortcut keys, numeric keys, or EPG, the composite image and channel selection diagram, as shown in FIG. 7, will appear on the screen. The user can choose a desired channel in a channel selection diagram through direction keys. The STB can obtain information about a channel selection diagram, such as size and location, through an interface between the STB and the EPG. The user can also access composite channels through the page turning key.

Optionally, a channel selection pointer is provided on the interface. The user can use the pointer to choose a particular image on the screen and highlight a channel image in accordance with the location control signal and image selection signal provided by the controller. Meanwhile, certain keys on the controller can also help select the particular image from this channel set.

The above-mentioned solution enhances the encoding system by allowing users to present layered images and accelerates searching, thus enhancing their satisfaction.

Preceding sections reveal that these embodiments have achieved some technical effects as follows:
simultaneously displaying the video content of each channel when a user is switching channels;
accelerating searching among a large number of live programs; and
assisting a user in selecting desired channels, and enhancing user satisfaction.

The prior embodiments are intended to illustrate but not to confine the scope of the present invention. Those skilled in the prior art can make various modifications and variations to the invention. The invention is intended to cover all the modifications, equivalent replacements, and improvements without departing from the spirit and principles of the present invention.

## Claims

1. An internet protocol television, IPTV, channel selection method, comprising:
simultaneously displaying images of each channel in a channel set on a screen according to a received media stream, and respectively presenting the images of each channel from the channel set in different areas of the screen in thumbnails; and
receiving a signal from a controller; if the signal is used for switching between pages, switching a channel set; if the signal is used for selecting a particular image in this channel set, switching a channel represented by the particular image.

2. The method according to claim 1, wherein the simultaneously displaying of the images of each channel in the channel set on the screen according to the received media stream, and presenting of the images of each channel from the channel set in different areas of the screen in thumbnails comprises:
receiving the media stream, which is combined from program sources in the channel set; and
decoding the media stream, where the decoded program sources of multiple channels are presented in the screen in thumbnails, and each channel is displayed in different areas of the screen.

3. The method according to claim 1, wherein the particular image in the channel set is selected by an interface connected to an electronic program guide, EPG.

4. The method according to claim 3, wherein the signal for selecting the particular image of the channel set comprises a location control signal and an image selection signal, and the switching of the channel represented by the particular image comprises:
using a channel selection pointer on the interface to choose the particular image on the screen and switch the channel represented by the particular image according to the location control signal and image selection signal.

5. An internet protocol television, IPTV, encoding method, comprising:
combining program sources in a channel set chosen by a user into a media stream, and delivering the media stream, where the delivered media stream enables the program sources of multiple channels in the channel set to be displayed on the screen in thumbnails and each channel is displayed in different areas of the screen.

6. The method according to claim 5, wherein:
the channels of the IPTV comprise N channel sets, wherein N is an integer equal to or greater than 1; and
when N is equal to or greater than 2, an N-1 channel set comprises a given number of channels, and the number of channels in one channel set is smaller than or equal to the given number.

7. The method according to claim 5, wherein the combining of the program sources in the channel set chosen by the user into the media stream comprises:
collecting the program sources of each channel in the channel set chosen by the user through a composite encoder, and combining the program sources into the media stream.

8. An internet protocol television, IPTV, -based composite encoding device, comprising:
multiple composite encoders, adapted to: collect program sources of a given number of channels, combine the program sources with the given number of channels into a media stream, and deliver the media stream.

9. A Set Top Box, STB, for an internet protocol television, IPTV, comprising:
a decoder, adapted to: decode a media stream of a channel set received by the STB to generate program sources of multiple channels, and display images of each channel in the multiple channels in different areas of a screen in thumbnails; and
a controller signal receiving and processing module, adapted to receive a signal from a controller; if the signal is used for switching between pages, switching a channel set; if the signal is used for selecting a particular image in this channel set, switching a channel represented by the particular image.

10. A Set Top Box, STB, for an internet protocol television, IPTV, comprising:
a receiver, adapted to receive a media stream of the IPTV, where the media stream is combined from multiple program sources in a channel set;
a decoder, adapted to: decode the media stream received by the receiver to generate program sources of multiple channels, and display images of each channel in the multiple channels in different areas of a screen in thumbnails; and
a controller signal receiving and processing module, adapted to receive a signal from a controller; if the signal is used for switching between pages, switching a channel set; if the signal is used for selecting a particular image in this channel set, switching a channel represented by the particular image.
